# EUROPÄISCHE PATENTANMELDUNG

(11) **EP 0 901 305 A2**
(43) Veröffentlichungstag der Anmeldung: **10.03.1999**
(21) Anmeldenummer: 98250313.8
(22) Anmeldetag: 04.09.1998
(51) Int. Cl.: H04Q 11/04

(54) **ISDN-Telekommunikationsanlage und Teilnehmerendeinrichtung**

(30) Priorität: 04.09.1997 DE 19739701; 09.09.1997 DE 19739516; 14.10.1997 DE 19746721
(71) Anmelder: ELMEG GmbH Kommunikationstechnik, D-31228 Peine (DE)
(72) Erfinder: Simon, Joachim, Dipl.-Phys., 24247 Mielkendorf (DE)
(74) Vertreter: Christiansen, Henning, Dipl.-Ing.

(57) **Zusammenfassung**

ISDN-Telekommunikationsanlage (3) mit einer amtsseitigen S₀-Schnittstelle und einer teilnehmerseitigen S₀-Schnittstelle (17) zum Anschluß von ISDN-Endgeräten (4, 5), wobei teilnehmerseitig ein Koppelfeld vorgesehen ist, das beim Empfang von Daten von den Endgeräten (4, 5, 11.1, 11.2) die auf dem internen S₀-Busses teilnehmerseitig eintreffenden Datenworte in mehrere Bitgruppen zerlegt und beim Senden von Daten an die Endgeräte (4, 5, 11.1, 11.2) mehrere Bitgruppen in ein Datenwort eines B-Kanals einkoppelt, wobei die Bitgruppen demselben Endgerät (4, 5, 11.1, 11.2) zugeordnet sind und wobei zur Umsetzung zwischen dem teilnehmerseitigen bitratenreduzierten Übertragungsstandard und dem amtsseitigen ISDN-Übertragungsstandard ein Transcoder vorgesehen ist und dem Koppelfeld und dem Transcoder ein Pufferspeicher zwischengeschaltet ist, der beim Empfang von Daten von den Endgeräten (4, 5, 11.1, 11.2) die Bitgruppen jeweils eines Datenworts zwischenspeichert und periodisch an den Transcoder (24.1, 24.2) weitergibt und beim Senden von Daten an die Endgeräte (4, 5, 11.1, 11.2) die vom Transcoder (24.1, 24.2) periodisch gelieferten Bitgruppen zwischenspeichert, um mehrere aufeinanderfolgende Bitgruppen in dasselbe Datenwort einkoppeln zu können.

## Beschreibung

Die Erfindung betrifft eine ISDN-Telekommunikationsanlage sowie eine Teilnehmerendeinrichtung zum Anschluß an eine derartige ISDN-Telekommunikationsanlage.

Diese ISDN-Telekommunikationsanlage ermöglicht den Betrieb mehrerer ISDN-Endgeräte an einem ISDN-Basisanschluß. Hierzu wird die ISDN-Telekommunikationsanlage über eine 4-Draht-Leitung an die S₀-Schnittstelle eines Netzabschlußgeräts (NTBA - network terminator basic access) angeschlossen, das in den Räumen des Benutzers installiert ist und den ISDN-Basisanschluß bereitstellt. Amtsseitig weist dieses Netzabschlußgerät eine U_{K0}-Schnittstelle auf und ist über eine herkömmliche 2-Draht-Leitung mit der zuständigen Ortsvermittlungsstelle (DIVO - Digitale Vermittlungsstelle Ortsnetz) verbunden. Teilnehmerseitig weist die ISDN-Telekommunikationsanlage ebenfalls eine S₀-Schnittstelle auf, an die über 4-Draht-Leitungen mehrere ISDN-Endgeräte angeschlossen werden können.

Zum einen bietet eine derartige ISDN-Telekommunikationsanlage eine Vielzahl von Komfort- und Vermittlungsfunktionen, wie beispielsweise den internen Aufbau von Verbindungen zwischen den an die ISDN-Telekommunikationsanlage angeschlossenen Endgeräten, ohne eine gebührenpflichtige Verbindung zur Ortsvermittlungsstelle aufbauen zu müssen.

Zum anderen ermöglicht die ISDN-Telekommunikationsanlage trotz der Beschränkung durch nur zwei B-Kanäle auf dem internen S₀-Bus den gleichzeitigen Betrieb von mehr als zwei ISDN-Endgeräten. Hierzu wird auf dem internen S₀-Bus eine bitratenreduzierte Kodierung verwendet, indem in die einzelnen Datenworte der B-Kanäle jeweils mehrere Datenworte der Endgeräte eingeschachtelt werden. So enthält jedes Datenwort beim ISDN-Übertragungsstandard mit einer Übertragungsrate von 64 kBit/s acht Bits, während beispielsweise der bei schnurlosen Telefonen übliche Übertragungsstandard DECT mit einer Übertragungsrate von 32 kBit/s in jedem Datenwort nur 4 Bit (engl. nibble) vorsieht, so daß die Datenworte zweier DECT-Endgeräte in ein Datenwort eines B-Kanals eingeschachtelt werden können. In der ISDN-Telekommunikationsanlage werden die von den bitratenreduziert arbeitenden Endgeräten stammenden und in Bytes zusammengefaßten Datenströme dann wieder in die ursprünglichen Bitgruppen zerlegt und anschließend durch einen Transcoder in den ISDN-Übertragungsstandard mit einer Übertragungsrate von 64 kBit/s umgesetzt.

Nachteilig hierbei ist, daß es auf dem internen S₀-Bus zu sogenannten D.C.-Balancing-Störungen kommen kann, d. h. die Übertragung ist nicht gleichspannungsfrei. Normalerweise wird die Gleichspannungsfreiheit der Datenübertragung auf dem internen S₀-Bus durch die Verwendung eines pseudoternären Kodes erreicht, der eine logische Eins mit einem Nullpegel und eine logische Null beim ersten Auftreten mit einem Impuls negativer Polarität und anschließend mit Impulsen wechselnder Polarität kodiert. Bei einem Datenwort mit einer geraden Zahl von logischen Nullen ist das Datenwort somit gleichspannungsfrei. Bei einer ungeraden Zahl von Nullen ist dagegen ein Überhangimpuls mit negativer Polarität vorhanden, der durch ein anschließendes Gleichspannungs-Ausgleichsbit (engl. D.C.-Balancing-Bit) mit positiver Polarität kompensiert wird, so daß die Datenübertragung auch in diesem Fall gleichspannungsfrei ist.

Bei der eingangs beschriebenen ISDN-Telekommunikationsanlage mit bitratenreduziert arbeitenden DECT-Endgeräten können die beiden Nibbles eines Datenworts auf dem B-Kanal dagegen von verschiedenen Endgeräten stammen, wobei in jedem Nibble die erste logische Null mit einem Impuls negativer Polarität kodiert ist. Falls nun beide Nibbles eine ungerade Zahl von logischen Nullen enthalten, so enthält das gesamte Datenwort zwei Überhangimpulse mit negativer Polarität, von denen nur einer durch das anschließende Gleichspannungs-Ausgleichsbit kompensiert werden kann, so daß die Datenübertragung in diesem Fall nicht gleichspannungsfrei ist. Der Gleichspannungsanteil auf dem internen S₀-Bus rührt also daher, daß die bitratenreduziert arbeitenden Endgeräte unabhängig voneinander die erste logische Null des ihnen zugeordneten Nibbles auf dem B-Kanal mit einem Impuls negativer Polarität kodieren, was bei ungeraden Zahlen von logischen Nullen in beiden Nibbles zu zwei Überhangimpulsen führt.

Der Erfindung liegt somit die Aufgabe zugrunde, eine ISDN-Telekommunikationsanlage der eingangs beschriebenen Art sowie bitratenreduziert arbeitende Endgeräte hierfür zu schaffen, bei denen die Datenübertragung auf dem internen S₀-Bis in jedem Fall gleichspannungsfrei ist.

Die Aufgabe wird, ausgehend von einer ISDN-Telekommunikationsanlage gemäß dem Oberbegriff des Anspruchs 1, durch die kennzeichnenden Merkmale des Anspruchs 1 bzw. hinsichtlich der entsprechend angepaßten Teilnehmerendeinrichtung durch die Merkmale des Anspruch 6 gelöst.

Die Erfindung schließt die technische Lehre ein, in die einzelnen Datenworte der B-Kanäle auf dem internen S₀-Bus anstelle der Datenworte verschiedener bitratenreduziert arbeitender Endgeräte jeweils mehrere aufeinanderfolgende Datenworte desselben Endgeräts einzukoppeln.

Werden an dem internen S₀-Bus beispielsweise gleichzeitig vier DECT-Endgeräte betrieben, so werden die ersten beiden Nibbles des ersten Endgeräts in das erste Byte des Bl-Kanals innerhalb eines S₀-Rahmens von 48 Bit eingekoppelt. In das erste B2-Kanal-Byte des S₀-Rahmens werden dann zwei aufeinanderfolgende Nibbles des dritten Endgeräts eingekoppelt. Das zweite Byte des Bl-Kanals enthält dann zwei aufeinanderfolgende Nibbles des zweiten Endgeräts und das zweite Byte des B2-Kanals innerhalb des S₀-Rahmens enthält schließlich zwei Nibbles des vierten Endgeräts. Selbstverständlich können die einzelnen Endgeräte die Bytes innerhalb eines S₀-Rahmens auch in anderer Reihenfolge belegen. Entscheidend ist lediglich, daß ein Byte nur die Daten eines Endgeräts enthält.

Bei der Einkopplung zweier aufeinanderfolgender Bitgruppen der bitratenreduziert arbeitenden Endgeräte in einen B-Kanal des internen S₀-Busses ist es wichtig, daß die Kodierung der beiden Bitgruppen nicht unabhängig voneinander erfolgen darf, um einen Gleichspannungsanteil auf dem internen S₀-Bus zu verhindern. Vielmehr muß die erste logische Null des zweiten Nibbles entgegengesetzt zu der letzten logischen Null des ersten Nibbles kodiert werden. Hierdurch wird sichergestellt, daß die logischen Nullen innerhalb eines Datenworts auf dem B-Kanal stets mit abwechselnder Polarität kodiert werden, so daß innerhalb eines Datenworts des B-Kanals maximal ein Überhangimpuls mit negativer Polarität auftreten kann, der durch das anschließende Gleichspannungs-Ausgleichsbit kompensiert wird.

Einerseits wird durch diese gemeinsame Einkopplung mehrerer, zeitlich aufeinanderfolgender Bitgruppen desselben Endgeräts in ein Datenwort eines B-Kanals vorteilhaft eine gleichspannungsfreie Datenübertragung auf dem internen So-Bus sichergestellt. Andererseits führt dies zu einer zeitlichen Verzerrung, da die normalerweise in gleichmäßigen zeitlichen Abständen auftretenden Bitgruppen der Endgeräte in einem anderen Rhythmus übertragen werden. Sowohl in der erfindungsgemäßen ISDN-Telekommunikationsanlage als auch in der erfindungsgemäßen Teilnehmerendeinrichtung ist deshalb ein Pufferspeicher vorgesehen, der beim Senden von Daten über den internen S₀-Bus eine Bitgruppe speichert, bis die nächste Bitgruppe eintrifft. Diese beiden aufeinanderfolgenden Bitgruppen werden dann gemeinsam durch ein Koppelfeld in dem Endgerät bzw. in der Telekommunikationsanlage in einen B-Kanal des internen S₀-Busses eingekoppelt. Entsprechend dient der Pufferspeicher beim Empfangen von Daten über den internen S₀-Bus zur Zwischenspeicherung eines kompletten Datenworts eines B-Kanals, wobei die einzelnen Bitgruppen von den Endgeräten in dem richtigen zeitlichen Rhythmus aus dem Pufferspeicher ausgelesen werden.

In einer Variante der Erfindung werden zwei ISDN-Datenrahmen mit einer Länge von jeweils 48 Bits bzw. 250 µs zu einem Überrahmen mit einer Länge von 96 Bits bzw. 500 µs zusammengefaßt. Teilnehmerseitig werden hierbei Endgeräte mit einer reduzierten Übertragungsrate von 16 kBit/s verwendet, wobei die in Bitpaaren vorliegenden Daten der Endgeräte in die B-Kanäle des internen S₀-Busses eingekoppelt werden. Jedes der acht Bytes des Überrahmens enthält hierbei vier Bitpaare eines Endgeräts, so daß insgesamt acht bitratenreduzierte Endgeräte gleichzeitig an dem internen S₀-Bus betrieben werden können.

Vorstehend wurde die Erfindung in Verbindung mit einem ISDN-Basisanschluß erläutert, der einen S₀-Bus mit zwei B-Kanälen mit einer Übertragungsrate von jeweils 64 kBit/s und einen zu Steuerungszwecken dienenden D-Kanal mit einer Übertragungsrate von 16 kBit/s bereitstellt. Die Erfindung ist jedoch in gleicher Weise mit einem ISDN-Primärmultiplexanschluß oder mit entsprechenden digitalen Schnittstellen realisierbar.

Auch ist die Erfindung nicht auf die Einkopplung von jeweils zwei Nibbles in ein Datenwort eines B-Kanals beschränkt. Es ist vielmehr auch möglich, mehr als zwei aufeinanderfolgende Bitgruppen eines Endgeräts in ein Datenwort eines B-Kanals einzukoppeln. So können bei einer Datenübertragungsrate von 8 kBit/s beispielsweise jeweils vier aufeinanderfolgende Bitpaare in ein Byte eines B-Kanals eingekoppelt werden.

Das vorstehend beschriebene Koppel feld kann beispielsweise in Software auf der Hardware-Plattform des integrierten ISDN-Prozessors VNS 80000 des US-Herstellers VLSI realisiert werden, der sich hierfür besonders eignet. Es ist jedoch auch möglich, das Koppel feld mit hierfür speziell zu entwickelnden Hardwarekomponenten zu realisieren.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung eine ISDN-Telekommunikationsanlage mit mehreren Teilnehmerendeinrichtungen als Blockschaltbild,
- Figur 2: die DECT-Funkbasisstation aus Figur 1 detailliert als Blockschaltbild,
- Figur 3: die ISDN-Telekommunikationsanlage aus Figur 1 detailliert als Blockschaltbild,
- Figur 4: die Rahmenstruktur der Datenübertragung der in Figur 1 dargestellten ISDN-Telekommunikationsanlage sowie
- Figur 5a,5b: die Rahmenstruktur auf dem internen S₀-Bus für verschiedene Ausführungsformen der Erfindung.

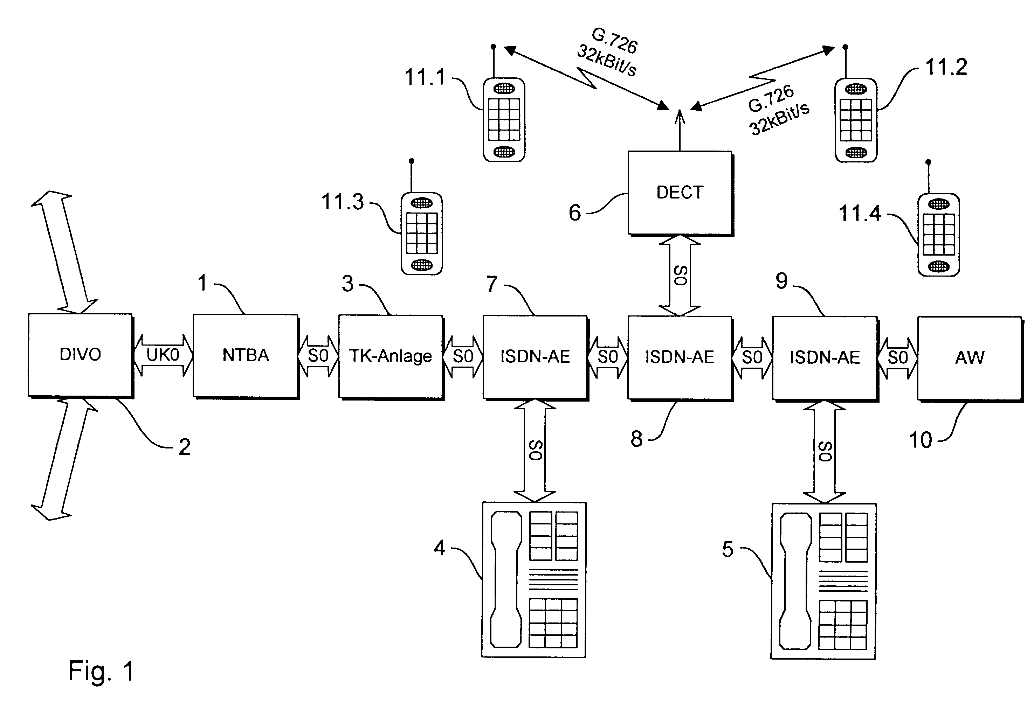

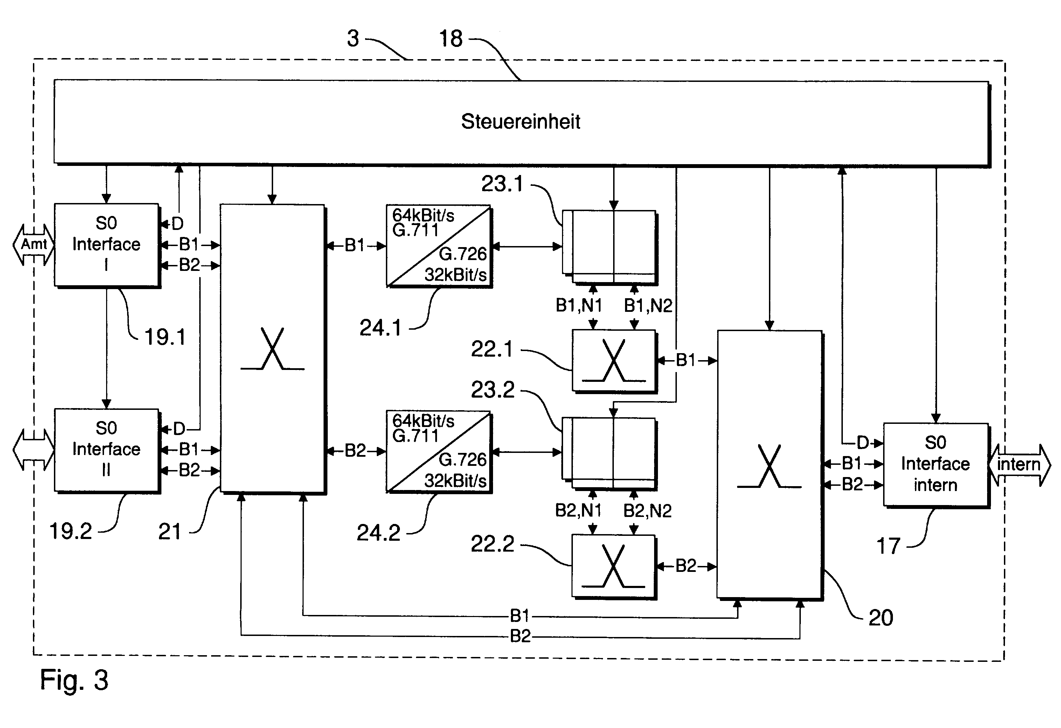

Die in Figur 1 gezeigte Anlagenkonfiguration ermöglicht den Anschluß einer Vielzahl von Endgeräten an einen ISDN-Basisanschluß, der an einem Netzabschlußgerät (NTBA - network terminator basic access) 1 bereitgestellt wird, wobei das Netzabschlußgerät 1 in den Räumen des Benutzers installiert ist und amtsseitig eine UKo-Schnittstelle aufweist, die über eine herkömmliche 2-Draht-Leitung mit einer Ortsvermittlungsstelle (DIVO - Digitale Vermittlungsstelle Ortsnetz) 2 verbunden ist. Die Ortsvermittlungsstelle 2 ermöglicht den Verbindungsaufbau zu anderen Teilnehmern und ist hierzu in das öffentliche ISDN-Netz eingebunden. Teilnehmerseitig weist das Netzabschlußgerät 1 eine S₀-Schnittstelle auf, die über eine 4-Draht-Leitung mit einer erfindungsgemäßen ISDN-Telekommunikationsanlage 3 verbunden ist, die detailliert in Figur 3 dargestellt ist und noch eingehend beschrieben wird.

Zusätzlich zu der (den) amtsseitigen S₀-Schnittstelle(n) weist die ISDN-Telekommunikationsanlage 3 mindestens eine weitere S₀-Schnittstelle auf, die einen internen S₀-Bus bereitstellt und teilnehmerseitig den Anschluß der einzelnen Teilnehmerendeinrichtungen 4, 5, 6 ermöglicht. Hierzu sind in den Räumen des Benutzers mehrere ISDN-Anschlußeinheiten (ISDN-AE) 7, 8, 9 verteilt angeordnet, die jeweils den Anschluß einer Teilnehmerendeinrichtung 4, 5 bzw. 6 ermöglichen und an den internen S₀-Bus angeschlossen sind, wobei der interne S₀-Bus durch die einzelnen ISDN-Anschlußeinheiten 7, 8, 9 durchgeschleift ist und an seinem Ende mit einem Abschlußwiderstand 10 verbunden ist, der Leitungsreflexionen auf dem internen S₀-Bus verhindert.

Bei den Teilnehmerendeinrichtungen 4, 5 handelt es sich um ISDN-Telefone, die sowohl den ISDN-Übertragungsstandard mit einer Datenübertragungsrate von 64 kBit/s entsprechend ITU (früher CCITT) Rec. G.711 als auch den DECT-Übertragungsstandard gemäß ITU Rec. G.711 mit einer Übertragungsrate von 32 kBit/s unterstützen. In der folgenden Beschreibung wird zur Erläuterung der erfindungsgemäßen Funktion der ISDN-Telekommunikationsanlage 3 davon ausgegangen, daß die ISDN-Telefone 4, 5 im DECT-Modus arbeiten.

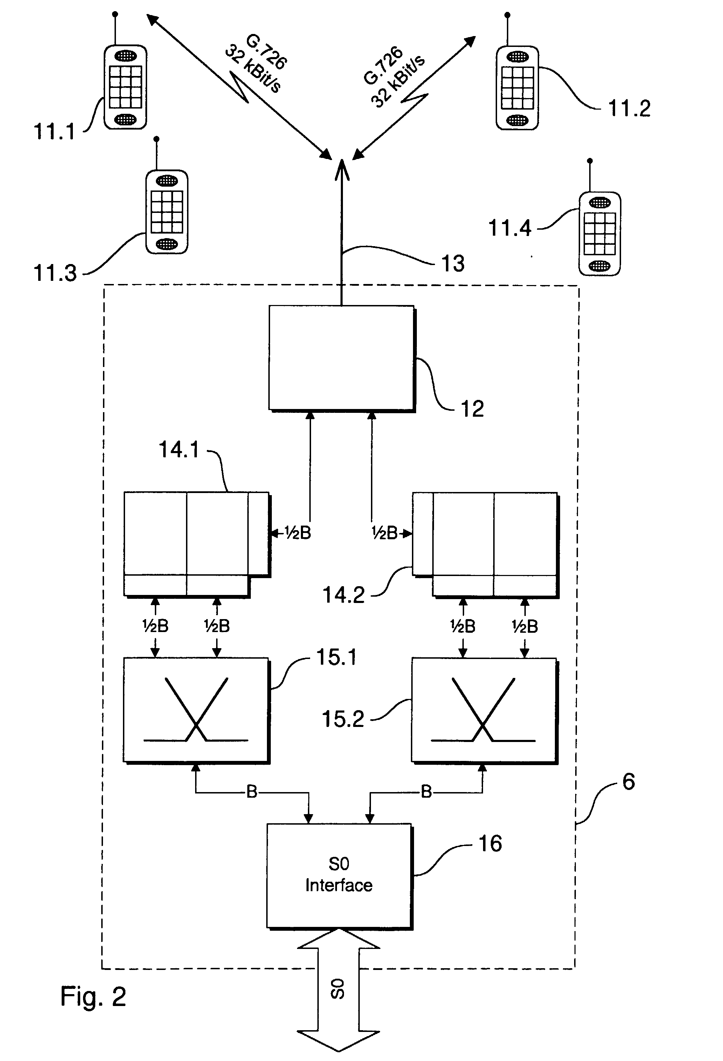

Weiterhin ist als Teilnehmerendeinrichtung eine DECT-Funkbasisstation 6 mit vier schnurlosen Telefonen 11.1 bis 11.4 angeschlossen, die detailliert in Figur 2 dargestellt ist und einen gleichzeitigen Betrieb von zwei der schnurlosen Telefone 11.1 bis 11.4 ermöglicht. Hierzu weist die DECT-Funkbasisstation 6 eine herkömmliche DECT-Sende-/Empfangsstation 12 auf, die mit einer Antenne 13 verbunden ist und eine Kommunikation mit den schnurlosen Telefonen 11.1 bis 11.4 entsprechend dem von der ETSI festgelegten Übertragungsstandard ETS 300175 ermöglicht, der eine Datenübertragungsrate von 32 kBit/s nach ITU (früher CCITT) Rec. G.726 vorsieht.

Im folgenden wird zunächst der Fall beschrieben, daß die aktiven schnurlosen Telefone 11.1, 11.2 über den internen S₀-Bus Daten zu der ISDN-Telekommunikationsanlage 3 übertragen. In diesem Fall liefert die DECT-Sende-/Empfangsstation 12 in gleichmäßigen Zeitabständen Bitgruppen mit jeweils vier Bits (engl. Nibbles), die zunächst in einem Pufferspeicher 14.1 bzw. 14.2 zwischengespeichert werden, um nachfolgend eine gemeinsame Übertragung zweier aufeinanderfolgender Nibbles zu ermöglichen. Der Pufferspeicher 14.1 dient hierbei zur Aufnahme der von dem schnurlosen Telefon 11.1 herrührenden Nibbles, während der Pufferspeicher 14.2 die Nibbles des Telefons 11.2 zwischenspeichert. Beim Eintreffen des nächsten Nibbles an den Pufferspeichern 14.1 bzw. 14.2 wird dieses zusammen mit dem im Pufferspeicher 14.1, 14.2 zwischengespeicherten letzten Nibble einem Koppelfeld 15.1 bzw. 15.2 zugeführt, das die beiden Nibbles gemeinsam in ein Datenwort eines B-Kanals einkoppelt. Jedes Datenwort auf einem B-Kanal des internen S₀-Busses enthält also hierbei nur die Nibbles eines Endgeräts 11.1 oder 11.2. Dies ist wichtig für die anschließende Kodierung entsprechend dem ISDN-Übertragungsstandard G.711 mit einer Datenübertragungsrate von 64 kBit/s, die von einer nachgeschalteten S₀-Schnittstelle 16 durchgeführt wird. Zur Kodierung der Daten wird hierbei entsprechend der ISDN-Übertragungsnorm ein pseudo-ternärer Kode verwendet, der eine logische Eins mit einem Nullpegel und eine logische Null beim ersten Auftreten mit einem Impuls negativer Polarität und anschließend mit Impulsen wechselnder Polarität kodiert. Bei einem Datenwort mit einer geraden Zahl von logischen Nullen ist das Datenwort somit gleichspannungsfrei. Bei einer ungeraden Zahl von Nullen ist dagegen ein Überhangimpuls mit negativer Polarität vorhanden, der durch ein anschließendes Gleichspannungs-Ausgleichsbit (engl. D.C.-Balancing-Bit) mit positiver Polarität kompensiert wird, so daß die Datenübertragung auf dem internen S₀-Bus auch in diesem Fall gleichspannungsfrei ist.

Die erfindungsgemäße Einkopplung zweier aufeinanderfolgender Nibbles desselben Endgeräts 11.1 oder 11.2 in ein Datenwort eines B-Kanals bietet den Vorteil, das die vorstehend beschriebene Kodierung von logischen Nullen mit wechselnden Polaritäten innerhalb des gesamten Datenworts durchgehalten werden kann, so daß maximal ein Überhangimpuls mit negativer Polarität auftreten kann, der durch das anschließende Gleichspannungs-Ausgleichsbit kompensiert wird. Bei der eingangs beschriebenen bekannten Anordnung kann diese Kodierungsregel dagegen verletzt werden, da die beiden Nibbles eines Datenworts auf einem B-Kanal von verschiedenen Endgeräten stammen, welche die erste logische Null innerhalb ihres Nibbles unabhängig voneinander mit negativer Polarität kodieren.

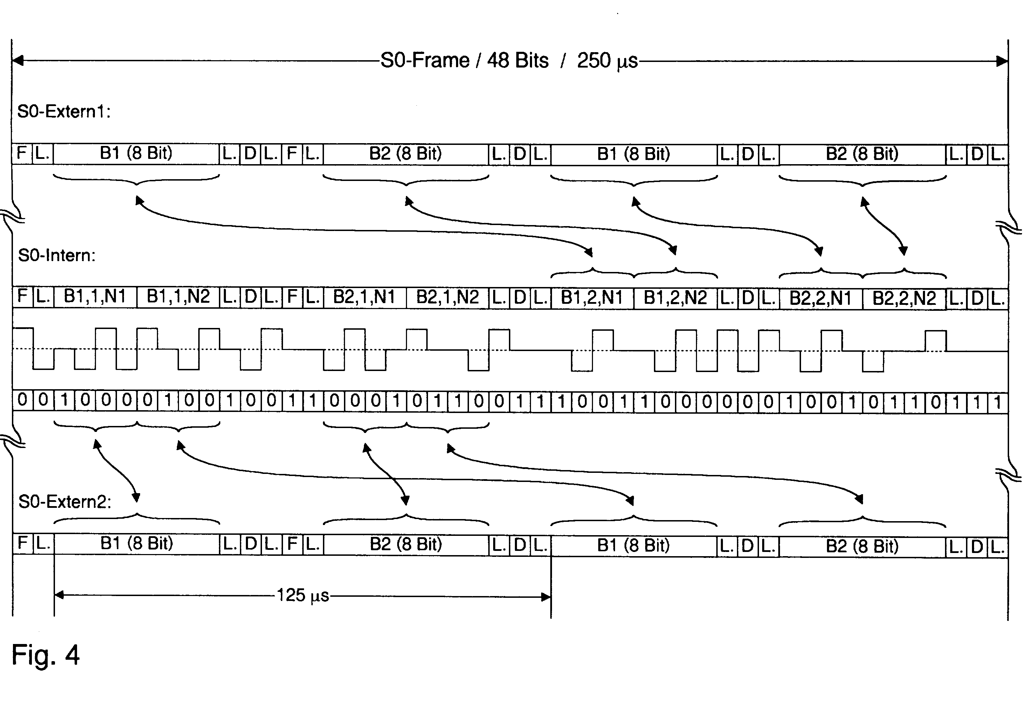

Im folgenden wird nun der Fall beschrieben, daß die aktiven schnurlosen Telefone 11.1, 11.2 über den internen S₀-Bus Daten von der ISDN-Telekommunikationsanlage 3 empfangen. Hierbei wird angenommen, daß die für das Telefon 11.1 bestimmten Daten innerhalb eines S₀-Rahmens jeweils im ersten Byte des B1-Kanals enthalten sind, während die für das Telefon 11.2 bestimmten Daten jeweils mit dem ersten Byte des B2-Kanals übertragen werden, wie auch in Figur 4 dargestellt ist. Die S₀-Schnittstelle 16 gibt diese beiden Bytes dann beim Empfang eines S₀-Rahmens an die Koppel felder 15.1, 15.2, welche die Bytes jeweils in zwei Nibbles zerlegen, die in den Pufferspeichern 14.1, 14.2 parallel eingespeichert werden. Anschließend werden die beiden Nibbles nacheinander aus den Pufferspeichern 14.1, 14.2 herausgeschoben und an die DECT-Sende-/Empfangsstation 12 weitergegeben, wobei die Abgabe der gespeicherten Nibbles periodisch erfolgt, um eine zeitliche Entzerrung der gemeinsam übertragenen Nibbles zu erreichen. Die DECT-Funkbasisstation 6 weist deshalb eine Steuereinrichtung auf, die hier zur Vereinfachung nicht dargestellt ist und die Pufferspeicher 14.1, 14.2 entsprechend ansteuert.

Im folgenden wird nun die Funktionsweise der erfindungsgemäßen ISDN-Telekommunikationsanlage 3 beschrieben, die detailliert in Figur 3 dargestellt ist. Teilnehmerseitig weist die ISDN-Telekommunikationsanlage 3 eine S₀-Schnittstelle 17 auf, die den internen S₀-Bus bereitstellt und einen Anschluß der Teilnehmerendeinrichtungen 4, 5, 6 ermöglicht. Die S₀-Schnittstelle 17 hat hierbei die Aufgabe, die Datenübertragung auf dem internen S₀-Bus entsprechend dem ISDN-Übertragungsstandard G.711 zu steuern, wobei die S₀-Schnittstelle 17 die im D-Kanal übertragenen Steuerdaten an eine Steuereinheit 18 überträgt, welche die vermittlungstechnische Datenübertragung steuert. So wertet die Steuereinheit 18 die auf dem D-Kanal teilnehmerseitig eintreffenden Steuerdaten aus und ermittelt daraus, ob die auf dem B-Kanal eingehenden Daten von einem ISDN-Endgerät herrühren oder zwei der vorstehend beschriebene "Subchannels" enthalten, die von den Endgeräten 11.1 bis 11.4 oder den Telefonen 4, 5 stammen, die mit der bitratenreduzierten Kodierung G.726 arbeiten. Weiterhin weist die ISDN-Telekommunikationsanlage zwei weitere S₀-Schnittstellen 19.1, 19.2 auf, die den Anschluß an ein Netzabschlußgerät 1 ermöglichen.

Sowohl die Steuereinheit 18 als auch die in Figur 2 dargestellte DECT-Funkbasisstation 6 verfügen über abgestimmte proprietäre Erweiterungen des standardisierten DSS1-Protokolls, um das Handling von Endgeräten mit "Subchanneling" abwickeln zu können.

Die teilnehmerseitig eingehenden B-Kanal-Daten werden dann einem Koppelfeld 20 zugeführt, das von der Steuereinheit 18 angesteuert wird und mit einem amtsseitig angeordneten weiteren Koppelfeld 21 verbunden ist. Das Koppelfeld 20 leitet die teilnehmerseitig eingehenden B-Kanal-Daten an das amtsseitige Koppelfeld 21 weiter, falls die B-Kanal-Daten von einem ISDN-Endgerät herrühren, da in diesem Fall keine weitere Konvertierung erforderlich ist. Entsprechend leitet das amtsseitige Koppelfeld 21 die amtsseitig eingehenden B-Kanal-Daten direkt an das teilnehmerseitige Koppel feld 20 weiter, falls ein herkömmliches ISDN-Endgerät an dem internen S₀-Bus angesprochen wird, da auch in diesem Fall keine Konvertierung erforderlich ist.

Im folgenden wird dagegen der Fall beschrieben, daß die Auswertung der teilnehmerseitig an der S₀-Schnittstelle 17 eingehenden D-Kanal-Daten durch die Steuereinheit 18 ergibt, daß die B-Kanal-Daten von einem DECT-Endgerät 11.1, 11.2, 4 oder 5 stammen, das nach einem bitratenreduzierten Übertragungsstandard arbeitet. In diesem Fall gibt das Koppelfeld 20 die teilnehmerseitig eingehenden B-Kanal-Daten an zwei Koppelfelder 22.1, 22.2 weiter, welche die Bytes der B-Kanäle jeweils in zwei Nibbles zerlegen. Jedes dieser Nibbles repräsentiert die zu zwei aufeinanderfolgenden Zeitpunkten von einem der Endgeräte 11.1, 11.2, 4, 5 gelieferten Daten. Die beiden Nibbles werden dann in einem Pufferspeicher 23.1, 23.2 zwischengespeichert und anschließend in einer vorgegebenen zeitlichen Abfolge aus dem Pufferspeicher 23.1, 23.2 herausgeschoben und einem Transcoder 24.1, 24.2 zugeführt, der von dem teilnehmerseitigen Übertragungsstandard gemäß ITU-Rec. G.726 mit einer Übertragungsrate von 32 kBit/s in den ISDN-Übertragungsstandard gemäß ITU-Rec. G.711 mit einer Übertragungsrate von 64 kBit/s umsetzt. Wichtig ist hierbei, daß die Nibbles in einem vorgegebenen zeitlichen Abstand von 125 µs aus dem Pufferspeicher 23.1, 23.2 herausgeschoben werden, was einem halben S₀-Rahmens entspricht. Hierdurch wird eine zeitliche Entzerrung erreicht und die ursprüngliche zeitliche Abfolge der Nibbles wieder hergestellt.

Im folgenden wird nun der Fall beschrieben, daß die Auswertung der amtsseitig eingehenden D-Kanal-Daten durch die Steuereinheit 18 ergibt, daß teilnehmerseitig ein DECT-Endgerät 11.1, 11.2, 4 oder 5 angesprochen wird. In diesem Fall leitet das Koppelfeld 21 die amtsseitig eingehenden B-Kanal-Daten an die beiden Transcoder 24.1, 24.2 weiter, die eine Umsetzung von dem ISDN-Übertragungsstandard gemäß ITU-Rec. G.711 mit einer Übertragungsrate von 64 kBit/s in den DECT-Übertragungsstandard gemäß ITU-Rec. G.726 mit einer Übertragungsrate von 32 kBit/s vornehmen.

Anschließend werden die derart konvertierten und in Form von Nibbles vorliegenden B-Kanal-Daten nacheinander in einen Pufferspeicher 23.1, 23.2 eingeschrieben, dessen Inhalt von dem Koppelfeld 22.1, 22.2 parallel ausgelesen werden kann. Das Koppelfeld 22.1, 22.2 liest also jeweils zwei zeitlich aufeinanderfolgende Nibbles aus dem Pufferspeicher 23.1, 23.2 aus und fügt diese zu einem Byte zusammen, das anschließend dem Koppel feld 20 zugeführt und in einen B-Kanal des internen S₀-Busses eingekoppelt wird.

Figur 4 zeigt die Rahmenstruktur bei der Datenübertragung von den DECT-Endgeräten 11.1, 11.2, 4, 5 zu der ISDN-Telekommunikationsanlage 3, wobei in der Bildmitte die Rahmenstruktur auf dem internen S₀-Bus dargestellt ist, während oben und unten die Rahmenstruktur auf den externen S₀-Bussen zwischen der ISDN-Telekommunikationsanlage 3 und dem Netzabschlußgerät 1 wiedergegeben ist.

Aus der Darstellung ist ersichtlich, daß über den S₀-Bus jeweils Rahmen mit einer Länge von 48 Bits übertragen werden, die neben Steuerinformationen zwei Bytes des Bl-Kanals und zwei Bytes des B2-Kanals enthalten. Am Beginn eines Rahmens steht zunächst ein Rahmenbit F (Framing Bit) mit logisch "0" und positiver Impulspolarität, gefolgt von einem Gleichspannungs-Ausgleichsbit L. (D.C.-Balancing-Bit) mit ebenfalls logisch "0", jedoch negativer Impulspolarität. Anschließend folgt das erste Byte des Bl-Kanals, das zwei Nibbles enthält, die von dem schnurlosen Telefon 11.1 erzeugt wurden. Nach dem ersten Byte des Bl-Kanals folgt ein weiteres Gleichspannungs-Ausgleichs-Bit L. (D.C.-Balancing-Bit), das einen eventuell auftretenden Gleichspannungsanteil des Bl-Kanals kompensieren soll. Das Gleichspannungs-Ausgleichs-Bit L. wird deshalb auf eine logische "0" mit positiver Impulspolarität gesetzt, wenn in dem zugehörigen Byte eine ungerade Zahl von logischen Nullen auftritt, da das Byte in diesem Fall einen Gleichspannungsanteil enthält.

Anschließend folgt dann ein D-Kanal-Bit D, wobei eine logische "0" des D-Kanal-Bits mit negativer Impulspolarität kodiert wird. In diesem Fall enthält das anschließende Gleichspannungs-Ausgleichs-Bit L. eine logische "0" mit positiver Impulspolarität.

Nach dem D-Kanal-Bit D mit dem zugehörigen Gleichspannungs-Ausgleichs-Bit L. wird dann ein Rahmenbit F mit einem zugehörigen Gleichspannungs-Ausgleichs-Bit L. übertragen. Sowohl das Rahmenbit F als auch das Gleichspannungs-Ausgleichs-Bit L. werden von dem zugehörigen Endgerät auf eine logische "0" mit negativer Impulspolarität gesetzt, um der ISDN-Telekommunikationsanlage 3 eine erfolgreiche Aufsynchronisierung auf den ISDN-Rahmen anzuzeigen.

Als nächstes werden dann die ersten acht Bits des B2-Kanals übertragen, die von dem schnurlosen Telefon 11.2 erzeugt wurden, wobei die erste logische "0" innerhalb des B2-Kanal-Bytes mit einer negativen Impulspolarität und alle folgenden logischen Nullen innerhalb des gesamten 82-Kanal-Bytes abwechselnd mit positiver und negativer Impulspolarität kodiert werden, so daß ein eventuell vorhandener Gleichspannungsanteil durch das folgende Gleichspannungs-Ausgleichs-Bit L. vollständig kompensiert werden kann.

Innerhalb des ISDN-Rahmens folgt dann das nächste B1-Kanal-Byte mit zwei Nibbles, die von dem im DECT-Modus arbeitenden ISDN-Telefon 4 erzeugt wurden, gefolgt von einem Gleichspannungs-Ausgleichs-Bit L. und einem D-Kanal-Bit mit dem zugehörigen Gleichspannungs-Ausgleichs-Bit L..

Anschließend folgt dann das nächste B2-Kanal-Byte mit zwei Nibbles, die von dem ebenfalls im DECT-Modus arbeitenden ISDN-Telefon 5 stammen. Das zweite Byte des B2-Kanals wird wiederum von einem Gleichspannungs-Ausgleichsbit L. gefolgt, das einen eventuell vorhandenen Gleichspannungsanteil dieses Bytes kompensiert.

Am Ende des ISDN-Rahmen steht dann schließlich ein D-Kanal-Bit D, gefolgt von einem Gleichspannungs-Ausgleichsbit L..

Aus der Darstellung in Figur 4 geht weiterhin hervor, wie die erfindungsgemäße ISDN-Telekommunikationsanlage 3 die Rahmenstruktur konvertiert, um trotz des teilnehmerseitigen Betriebs von DECT-Endgeräten 4, 5, 11.1, 11.2 amtsseitig eine Verbindung mit herkömmlichen ISDN-Endgeräten zu ermöglichen.

Im folgenden wird die Konvertierung zunächst für den Fall beschrieben, daß an dem internen S₀-Bus gleichzeitig vier DECT-Endgeräte 11.1, 11.2, 4, 5 betrieben werden, die Daten zu der ISDN-Telekommunikationsanlage 3 übertragen.

In diesem Fall enthält das erste Byte des Bl-Kanals zwei Nibbles des schnurlosen Telefons 11.1, die zeitlich nacheinander erzeugt wurden. Diese beiden Nibbles werden von dem Transcoder 24.1 von dem Übertragungsstandard gemäß ITU-Rec. G.726 mit einer Übertragungsrate von 32 kBit/s in den ISDN-Übertragungsstandard gemäß ITU-Rec. G.711 mit einer Übertragungsrate von 64 kBit/s umgesetzt und bilden anschließend zwei komplette Bytes, die in einen S₀-Rahmen der externen S₀-Schnittstelle 19.2 eingekoppelt werden, wie die geschwungenen Pfeile in Figur 4 verdeutlichen. Das aus dem ersten Nibble resultierende Byte wird hierbei innerhalb eines S₀-Rahmens der externen S₀-Schnittstelle 19.2 in das erste Byte des B1-Kanals eingekoppelt, während das aus dem zweiten Nibble resultierende Byte das zweite Byte des B1-Kanals bildet.

Das erste Byte des B2-Kanals des internen S₀-Busses enthält dagegen zwei Nibble, die nacheinander von dem schnurlosen Telefon 11.2 erzeugt wurden. Diese Nibble werden von dem Transcoder 24.2 umgesetzt und bilden anschließend zwei komplette Bytes, die an der externen S₀-Schnittstelle 19.2 zeitversetzt in die beiden Bytes des B2-Kanals eingekoppelt werden.

Entsprechend stammt das zweite Byte des Bl-Kanals des internen S₀-Busses von dem im DECT-Modus arbeitenden Telefon 4. Dieses Byte enthält ebenfalls zwei Nibbles, die zeitlich aufeinanderfolgenden Abtastzeitpunkten entsprechen und nach der Umsetzung durch den Transcoder 24.1 jeweils ein komplettes Byte bilden. Diese Bytes werden anschließend an der externen S₀-Schnittstelle 19.1 in die beiden Bytes des Bl-Kanals eingekoppelt, wie aus den geschwungenen Pfeilen ersichtlich ist.

Schließlich enthält das zweite Byte des B2-Kanals des internen S₀-Busses zwei Nibble, die von dem im DECT-Modus arbeitenden Telefon 5 herrühren. Diese beiden Nibble werden wiederum von dem Transcoder 24.2 in komplette Bytes umgesetzt und anschließend an der externen S₀-Schnittstelle 19.1 in die beiden Bytes des B2-Kanals eingekoppelt.

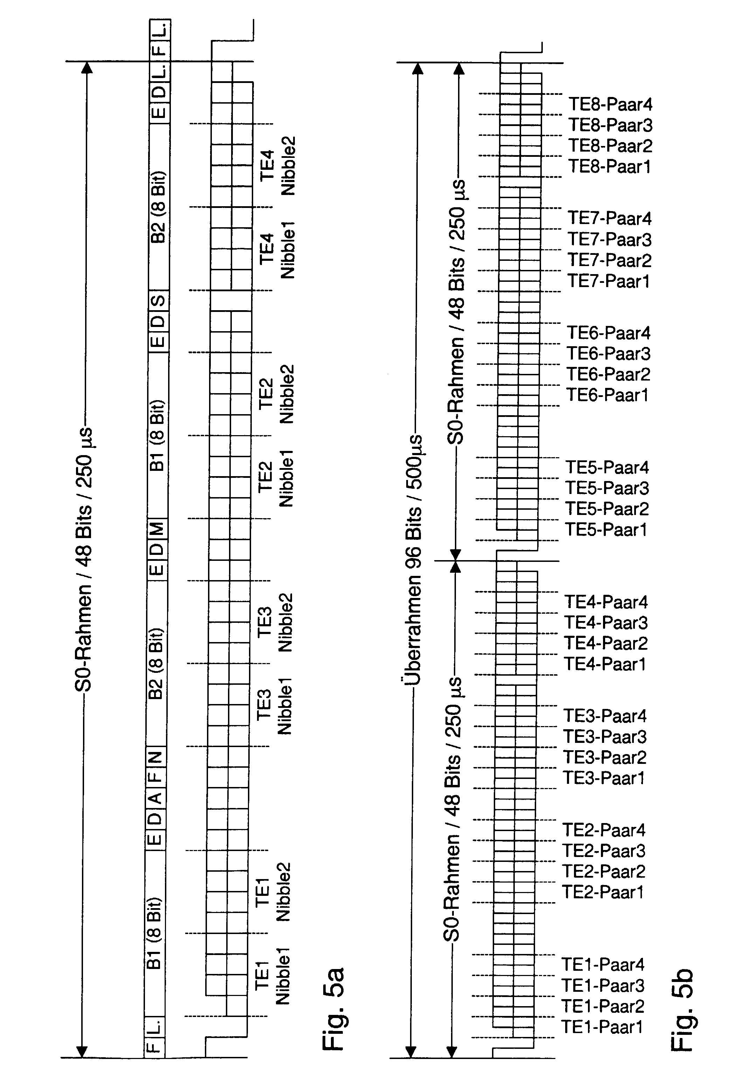

Figur 5a zeigt die vorstehend beschriebene Rahmenstruktur zur Verdeutlichung in einer übersichtlicheren Darstellung, aus der ersichtlich ist, daß jedes Byte eines B-Kanals jeweils nur die Daten eines Telekommunikations-Endgeräts TE1, TE2, TE3 oder TE4 enthält, wobei die Daten der Telekommunikations-Endgeräte in Form von Nibbles vorliegen.

Figur 5b zeigt eine weitere mögliche Rahmenstruktur, bei der zwei ISDN-Rahmen mit einer Länge von jeweils 48 Bits bzw. 250 µs zu einem Überrahmen mit einer Länge von 96 Bits bzw. 500 µs zusammengefaßt wird. Die Endgeräte arbeiten hierbei bitratenreduziert mit einer Übertragungsrate von 16 kBit/s, so daß die Daten der einzelnen Endgeräte TE1 TE8 in Form von Bitpaaren vorliegen. Jedes B-Kanal-Byte enthält somit vier Bitpaare eines Endgeräts, so daß ein gleichzeitiger Betrieb von maximal acht Endgeräten an dem internen S₀-Bus möglich ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. ISDN-Telekommunikationsanlage (3) mit einer amtsseitigen S- oder U-Schnittstelle (19.1, 19.2) zum Anschluß an ein Netzabschlußgerät (1) oder zum direkten Anschluß an eine digitale Vermittlungsstelle (2) sowie mit einer teilnehmerseitigen S-Schnittstelle (17) zur Bereitstellung eines internen S-Busses und zum Anschluß von ISDN-Endgeräten (4, 5, 11.1, 11.2) an den internen S-Bus,
**dadurch gekennzeichnet**,
daß teilnehmerseitig ein erstes Koppelfeld (20, 22.1, 22.2) vorgesehen ist, das beim Empfang von Daten von den Endgeräten (4, 5, 11.1, 11.2) die auf einem B-Kanal des internen S-Busses teilnehmerseitig eintreffenden Datenworte jeweils in mehrere Bitgruppen zerlegt und beim Senden von Daten an die Endgeräte (4, 5, 11.1, 11.2) jeweils mehrere Bitgruppen in ein Datenwort eines B-Kanals einkoppelt, wobei die in einem Datenwort enthaltenen Bitgruppen demselben Endgerät (4, 5, 11.1, 11.2) zugeordnet sind, das nach einem bitratenreduzierten Übertragungsstandard arbeitet,
daß zur Umsetzung zwischen dem teilnehmerseitigen bitratenreduzierten Übertragungsstandard und dem amtsseitigen ISDN-Übertragungsstandard ein Transcoder (24.1, 24.2) vorgesehen ist,
daß dem ersten Koppelfeld (20, 22.1, 22.) und dem Transcoder (24.1, 24.3) ein Pufferspeicher (23.1, 23.2) zwischengeschaltet ist, der beim Empfang von Daten von den Endgeräten (4, 5, 11.1, 11.2) die Bitgruppen jeweils eines Datenworts zwischenspeichert und mit entsprechender Zeitverzögerung periodisch an den Transcoder (24.1, 24.2) weitergibt und beim Senden von Daten an die Endgeräte (4, 5, 11.1, 11.2) die vom Transcoder (24.1, 24.2) periodisch gelieferten Bitgruppen zwischenspeichert, um mehrere aufeinanderfolgende Bitgruppen in dasselbe Datenwort eines B-Kanals einzukoppeln.

2. ISDN-Telekommunikationsanlage (3) nach Anspruch 1, **dadurch gekennzeichnet**, daß dem Transcoder (24.1, 24.2) und der amtsseitigen S-Schnittstelle (19.1, 19.2) ein mit der teilnehmerseitigen S-Schnittstelle (17) verbundenes zweites Koppelfeld (21) zwischengeschaltet ist, welches die amtsseitigen B-Kanäle wahlweise mit dem Transcoder (24.1, 24.2) oder unter Umgehung des Transcoders (24.1, 24.2) mit der teilnehmerseitigen S-Schnittstelle (17) verbindet.

3. ISDN-Telekommunikationsanlage (3) nach Anspruch 2, **dadurch gekennzeichnet**, daß zur Steuerung des ersten und/oder zweiten Koppelfeldes (20, 22.1, 22.2, 21) und/oder des Schreib-/Leseverhaltens des Pufferspeichers (23.1, 23.2) eine Steuereinheit (18) vorgesehen ist, die zur Auswertung der D-Kanal-Protokoll-Daten mit der amtsseitigen S-Schnittstelle (19.1, 19.2) und der teilnehmerseitigen S-Schnittstelle (17) verbunden ist.

4. ISDN-Telekommunikationsanlage (3) nach einem der vorhergehenden Ansprüche, **dadurch gekennzeichnet**, daß das erste Koppelfeld (20, 22.1, 22.2) die teilnehmerseitig eintreffenden Bytes der B-Kanäle jeweils in zwei Nibbles zerlegt.

5. ISDN-Telekommunikationsanlage (3) nach einem der vorhergehenden Ansprüche, **dadurch gekennzeichnet,** daß der bitratenreduzierte Übertragungsstandard der ITU-Empfehlung G.726 und/oder der ISDN-Übertragungsstandard der ITU-Empfehlung G.711 folgt.

6. Digitale Teilnehmerendeinrichtung (6) zum Anschluß an eine ISDN-Telekommunikationsanlage (3) nach einem der vorhergehenden Ansprüche,
mit mindestens einem entsprechend dem bitratenreduzierten Übertragungsstandard arbeitenden digitalen Telekommunikations-Endgerät (11.1 bis 11.4) und einer S-Schnittstelle (16) zum Anschluß an den internen S-Bus der ISDN-Telekommunikationsanlage (3),
**dadurch gekennzeichnet,**
daß schnittstellenseitig ein Koppelfeld (15.1, 15.2) vorgesehen ist, das beim Senden von Daten mehrere Bitgruppen eines Endgeräts (11.1 bis 11.4) in dasselbe Datenwort eines B-Kanals auf dem internen S-Bus einkoppelt und beim Empfang von Daten die auf dem internen S-Bus eintreffenden Datenworte in mehrere Bitgruppen zerlegt,
daß dem Koppelfeld (15.1, 15.2) ein Pufferspeicher (14.1, 14.2) vorgeschaltet ist, der beim Empfang von Daten über den internen S-Bus die Bitgruppen jeweils eines Datenworts zwischenspeichert und mit entsprechender Zeitverzögerung periodisch an das Endgerät (11.1 bis 11.4) weitergibt und beim Senden von Daten an die ISDN-Telekommunikationsanlage (3) die von dem Endgerät (11.1 bis 11.4) periodisch eintreffenden Bitgruppen zwischenspeichert, um eine gemeinsame Einkopplung mehrerer aufeinanderfolgender Bitgruppen in dasselbe Datenwort zu ermöglichen.

7. Teilnehmerendeinrichtung (6) nach Anspruch 6, **gekennzeichnet durch** die Ausbildung als DECT-Funkbasisstation (6), wobei die Telekommunikations-Endgeräte Mobilteile (11.1 bis 11.4) der DECT-Funkbasisstation (6) sind und der bitratenreduzierte Übertragungsstandard der ITU-Empfehlung G.726 folgt.
